# EUROPÄISCHE PATENTANMELDUNG

(11) **EP 2 533 070 A1**
(43) Veröffentlichungstag der Anmeldung: **12.12.2012**
(21) Anmeldenummer: 12165725.8
(22) Anmeldetag: 26.04.2012
(51) Int. Cl.: G01S 7/521, G01S 15/93

(54) **Sensoranordnung eines Sensorsystems einer fahrbaren Plattform sowie Sensorsystem**

(30) Priorität: 10.06.2011 DE 102011077352
(71) Anmelder: ROBERT BOSCH GMBH, 70442 Stuttgart (DE)
(72) Erfinder: Bartylla, David, 64560 Riedstadt (DE); Schumann, Michael, 70597 Stuttgart (DE)

(57) **Zusammenfassung**

Die Erfindung betrifft eine Sensoranordnung (100) eines Sensorsystems einer fahrbaren Plattform zur Lokalisierung von die fahrbare Plattform umgebenden Objekten, aufweisend zumindest ein Sendeelement (1) und wenigstens ein von dem zumindest einem Sendeelement (1) funktional getrenntes Empfangselement (2), wobei das zumindest eine Sendeelement (1) zum Aussenden von Ultraschallsignalen (9) und das wenigstens eine Empfangselement (2) zum Empfangen von an den die fahrbare Plattform umgebenden Objekten reflektierten Ultraschallsignalen (10) ausgestaltet sind sowie ein Sensorsystem einer fahrbaren Plattform zur Lokalisierung von die fahrbare Plattform umgebenden Objekten, aufweisend wenigstens eine derartige Sensoranordnung, eine Auswerteeinrichtung und eine Anzeigeeinrichtung.

## Beschreibung

Die vorliegende Erfindung betrifft eine Sensoranordnung eines Sensorsystems einer fahrbaren Plattform zur Lokalisierung von die fahrbare Plattform umgebenden Objekten sowie ein Sensorsystem einer fahrbaren Plattform zur Lokalisierung von die fahrbare Plattform umgebenden Objekten mit einer Sensoranordnung.

### STAND DER TECHNIK

Es ist grundsätzlich bekannt fahrbare Plattformen, insbesondere Fahrzeuge wie zum Beispiel Personenkraftfahrzeuge, mit Sensoren auszustatten, um die Umgebung der fahrbaren Plattform zu vermessen. Insbesondere ist dabei bekannt Sensoren einzusetzen, die es erlauben, Objekte zu lokalisieren, die die fahrbare Plattform umgeben. Beispielsweise können in einem Fahrzeug weitere Fahrzeugsysteme, wie zum Beispiel ein Parkassistenzsystem, auf den Messdaten der Sensoren aufbauen und dem Benutzer des Fahrzeugs Funktionen, wie zum Beispiel eine Einparkhilfe, zur Verfügung stellen. Ferner ist es bekannt, zur Lokalisierung von Objekten Ultraschall zu verwenden. Dabei werden Ultraschallsignale von einem Sensor ausgesandt und die Reflexionen der Ultraschallsignale an den die fahrbare Plattform umgebenden Objekten vom Sensor wieder aufgefangen. Aus der Laufzeit der Ultraschallsignale kann im Anschluss die Position der Objekte bestimmt werden. Ultraschallsensoren, die insbesondere auf eine Anordnung eines Lautsprechers zum Aussenden der Ultraschallsignale und eines Mikrofons zum Empfangen der Ultraschallsignale basieren, benötigen viel Bauraum. Da insbesondere zur genauen Lokalisierung von Objekten mehrere Ultraschallsensoren benötigt werden, stellt dies eine Einschränkung in der Verfügbarkeit von Ultraschallsensoren für eine Sensoranordnung zur Lokalisierung von die fahrbare Plattform umgebenden Objekten dar.

Es ist die Aufgabe der vorliegenden Erfindung, die voranstehend genannten Nachteile zu beheben. Insbesondere ist es Aufgabe der vorliegenden Erfindung, eine Sensoranordnung zur Verfügung zu stellen, die vergleichsweise wenig Bauraum beansprucht. Ferner soll eine Sensoranordnung bereitgestellt werden, die es erlaubt, die die fahrbare Plattform umgebenden Objekte mit hoher Genauigkeit zu lokalisieren.

Gelöst wird die voranstehende Aufgabe durch eine Sensoranordnung eines Sensorsystems mit den Merkmalen des unabhängigen Anspruchs 1 sowie einem Sensorsystem mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Sensoranordnung beschrieben sind, selbstverständlich auch im Zusammenhang mit dem erfindungsgemäßen Sensorsystem und jeweils umgekehrt, so dass bezüglich der Offenbarung zu den einzelnen Erfindungsaspekten stets wechselseitig Bezug genommen wird beziehungsweise werden kann.

### OFFENBARUNG DER ERFINDUNG

Gemäß einem ersten Aspekt der Erfindung wird die Aufgabe durch eine Sensoranordnung eines Sensorsystems einer fahrbaren Plattform, insbesondere eines Fahrzeugs, zum Beispiel eines Personenkraftfahrzeugs, zur Lokalisierung von die fahrbare Plattform umgebenden Objekten, aufweisend zumindest ein Sendeelement und wenigstens ein von dem zumindest einen Sendeelement funktional getrenntes Empfangselement, wobei das zumindest eine Sendeelement zum Aussenden von Ultraschallsignalen und das wenigstens eine Empfangselement zum Empfangen von an den die fahrbare Plattform umgebenden Objekten reflektierten Ultraschallsignalen ausgestaltet sind, gelöst. Insbesondere weisen das zumindest eine Sendeelement und das wenigstens eine Empfangselement der erfindungsgemäßen Sensoranordnung jeweils ein Dickenschwingerelement auf.

Ein Dickenschwingerelement ist dabei eine Platte mit geringer Dicke, insbesondere einer Dicke von weniger als 1 mm, die ihre Dicke verändern kann. Dabei bewegt sich die Oberfläche der Platte weitgehend gleichmäßig. Besteht der Dickenschwinger aus einem elektrisch aktiven Material, verändert sich die Dicke bei einer angelegten elektrischen Spannung. Insbesondere bei einer elektrischen Wechselspannung ändert sich die Dicke des Dickenschwingerelements periodisch mit der Frequenz der angelegten Wechselspannung. Trifft auf ein Dickenschwingerelement ein Ultraschallsignal, so bewirkt auch dies eine Änderung der Dicke des Dickenschwingerelementes, wobei eine elektrische Spannungsdifferenz entsteht, die wiederum gemessen werden kann. Durch das Anlegen einer Spannung kann somit das Sendeelement mit einem Dickenschwingerelement ausgestattet werden, durch das Messen der entstehenden Spannung, die durch das Auftreffen von Ultraschallimpulsen im Dickenschwingerelement erzeugt werden, kann das Empfangselement mit einem Dickenschwingerelement ausgerüstet werden. Durch die funktionale Trennung des Sende- und des Empfangselementes ist eine unterschiedliche Verschaltung der beiden Elemente besonders einfach zu realisieren. Wie bereits erwähnt, zeichnen sich Dickenschwingerelemente insbesondere durch ihre geringe Bauhöhe aus. Dadurch ist es möglich, eine derartige Sensoranordnung eines Sensorsystems auch an Orten der fahrbaren Plattform anzubringen, die nur einen gewissen Bauraum, insbesondere eine gewisse Bauhöhe, zulassen. Dadurch kann eine derartige Sensoranordnung sehr vielfältig an der fahrbaren Plattform platziert werden.

In einer bevorzugten Weiterentwicklung der Erfindung kann bei der Sensoranordnung vorgesehen sein, dass das zumindest eine Sendeelement einen Stapel aus zumindest zwei Dickenschwingerelementen aufweist, die elektrisch parallel geschaltet sind. Somit liegt an jedem Dickenschwingerelement des Stapels die gleiche Spannung an und die Dickenänderungen der einzelnen Dickenschwingerelemente der Schichten addieren sich. Dadurch erreicht man bei einer gegebenen Spannung eine höhere Gesamtdickenänderung des Stapels, die insbesondere proportional zur Anzahl der Dickenschwingerelemente im Stapel ist. Eine größere Gesamtdickenänderung führt dabei zu einem größeren Schalldruck, wodurch eine exaktere Lokalisierung der die fahrbare Plattform umgebenden Objekte und eine größere Reichweite ermöglicht werden.

Ferner kann bei einer erfindungsgemäßen Sensoranordnung vorgesehen sein, dass das wenigstens eine Empfangselement einen Stapel aus zumindest zwei Dickenschwingerelementen aufweist, die elektrisch seriell geschaltet sind. Durch die serielle Schaltung der einzelnen Dickenschwingerelemente des Stapels addieren sich die Spannungen, die durch die reflektieren Ultraschallimpulse in den einzelnen Dickenschwingerelementen erzeugt werden. Die Gesamtspannung, die an dem Stapel abgegriffen werden kann, ist somit insbesondere proportional zur Anzahl der verwendeten Dickenschwingerelemente. Durch die höhere Spannung ergibt sich eine Erhöhung der Sensitivität des gesamten Empfangselementes. Dadurch können reflektiere Ultraschallimpulse mit geringerer Intensität gemessen werden. Wiederum kann dadurch die Reichweite und die Auflösung der Lokalisierung der die fahrbare Plattform umgebenden Objekte erhöht werden.

Ein weiterer Vorteil einer erfindungsgemäßen Sensoranordnung kann dadurch gegeben sein, dass zwei oder mehr Sendeelemente und zwei oder mehr Empfangselemente vorgesehen sind. Durch den Einsatz von mehreren Sendeelementen und mehreren Empfangselementen können neben Abstands- auch Winkelinformationen aus den empfangenen reflektierten Ultraschallsignalen gewonnen werden. Dadurch wird die Genauigkeit, mit der Objekte in der Umgebung der fahrbaren Plattform lokalisiert werden können, deutlich erhöht.

In einer bevorzugten Weiterentwicklung der Erfindung kann bei einer Sensoranordnung vorgesehen sein, dass die zwei oder mehr Sendeelemente benachbart zueinander und die zwei oder mehr Empfangselemente benachbart zueinander angeordnet sind. Das Anordnen der Sende- beziehungsweise Empfangselemente benachbart zueinander erhöht die effektive Fläche, die zum Senden beziehungsweise Empfangen von Ultraschallsignalen zur Verfügung steht. Dadurch wird die Sensitivität der gesamten Sensoranordnung erhöht, da zum einen eine Wellenfront an Ultraschallsignalen mit größerer Schalldruckamplitude ausgesendet werden kann und zum anderen ein größeres effektives Empfangselement zur Verfügung steht. Auch durch diese Maßnahme kann die Genauigkeit der Lokalisierung der die fahrbare Plattform umgebenden Objekte erhöht werden.

Ferner kann bei einer Weiterentwicklung einer erfindungsgemäßen Sensoranordnung vorgesehen sein, dass die Sendeelemente und die Empfangselemente zusammen ein Sensorarray bilden. In einem Sensorarray sind sowohl Empfangs- als auch Sendeelemente örtlich zusammengefasst. Dies benötigt besonders wenig Bauraum und erleichtert die Montage der erfindungsgemäßen Sensoranordnung, da die Sensoranordnung an weniger Stellen an der fahrbaren Plattform angebracht wird.

Ferner kann gemäß einer Weiterentwicklung einer Sensoranordnung vorgesehen sein, dass das Sensorarray ein irreguläres Sensorarray, ein lineares Sensorarray oder ein n x m-Sensorarray ist, wobei m und n ganze Zahlen größer als 1 sind. Ein irreguläres Sensorarray ist dabei eine beliebige, geometrische Anordnung der einzelnen Sendebeziehungsweise Empfangselemente. Durch eine irreguläre Anordnung und die dadurch realisierbaren, verschiedenen Abständen zwischen den einzelnen Elementen des Sensorarrays, kann eine besonders hohe Sensitivität des Sensorarrays erreicht werden. Durch Benutzung einer Folie, etwa einer Ferroelektret-Folie oder einer piezoelektrische Folie, als Dickenschwinger oder einer Schutzfolie für das Sensorarray, kann die Irregularität des Sensorarrays verdeckt werden. Eine lineare beziehungsweise n x m-artige Ausgestaltung eines Sensorarrays stellen weitere Möglichkeiten dar, ein Sensorarray derart aufzubauen, dass es für verschiedene Anwendungsorte an der fahrbaren Plattform besonders geeignet ist. Insbesondere zum Beispiel an der Kennzeichenhalterung eines Fahrzeugs kann ein lineares Sensorarray angebracht werden. Ein n x m-artiges, und damit rechteckiges, Sensorarray kann zum Beispiel in einem Stoßfänger eines Fahrzeugs angeordnet sein.

In einer weiteren Ausgestaltungsform einer erfindungsgemäßen Sensoranordnung kann vorgesehen sein, dass jedem der zumindest zwei Sendeelemente zumindest ein weiteres Sendeelement benachbart angeordnet ist und/oder dass jedem der zumindest zwei Empfangselemente zumindest ein weiteres Empfangselement benachbart angeordnet ist. Durch eine derartige Anordnung der Sendebeziehungsweise Empfangselemente ist sichergestellt, dass immer mindestens zwei Sende- beziehungsweise Empfangselemente benachbart angeordnet sind. Durch benachbarte Sendeelemente kann das abgegebene Ultraschallsignal geformt werden. Durch benachbarte Empfangselemente wird ein großflächiger, modularer Empfangsbereich bereitgestellt, der eine Richtungsbestimmung des empfangenen, reflektierten Ultraschallsignals ermöglicht. Beide Maßnahmen erhöhen die Sensitivität der Sensoranordnung und somit die Genauigkeit, mit der Objekte in der Umgebung der fahrbaren Plattform lokalisiert werden können.

Ferner kann in einer bevorzugten Ausgestaltung der erfindungsgemäßen Sensoranordnung vorgesehen sein, dass jedes Sendeelement auch als Empfangselement und jedes Empfangselement auch als Sendeelement ausgebildet sind. Hierbei ist zu beachten, dass insbesondere bei der Verwendung eines Sendeelementes, bestehen aus einem Stapel aus zumindest zwei elektrisch parallel geschalteten Dickenschwingerelementen, die Empfindlichkeit bei einem Betrieb als Empfangselement gegenüber einem Empfangselement, bestehend aus einem Stapel aus zumindest zwei elektrisch seriell geschalteten Dickenschwingerelementen, erniedrigt ist. Dennoch ist ein Betrieb der Sendeelemente als Empfangselement möglich, die Empfangsgenauigkeit der gesamten Sensoranordnung wird durch diese Maßnahme erhöht. Analog ist es bei einem Empfangselement, das aus einem Stapel aus zumindest zwei elektrisch seriell geschalteten Dickenschwingerelementen besteht, möglich, dieses auch als Sendeelement zu betreiben. Gegenüber einem expliziten Sendeelement ist jedoch bei einer elektrisch seriellen Schaltung der Dickenschwingerelemente die Amplitude der resultierenden Ultraschallsignale erniedrigt. Die Gesamtamplitude der Ultraschallsignale lässt sich jedoch durch die Hinzunahme der als Sendeelemente betriebenen Empfangselemente steigern. Somit kann durch beide Maßnahmen die Gesamtsensitivität der Sensoranordnung erhöht und daraus folgend die Genauigkeit, mit der Objekte in der Umgebung der fahrbaren Plattform lokalisiert werden können, erhöht werden.

Gemäß einem zweiten Aspekt der Erfindung wird die Aufgabe durch ein Sensorsystem einer fahrbaren Plattform zur Lokalisierung von die fahrbaren Plattform umgebenden Objekten, aufweisend wenigstens eine Sensoranordnung, eine Auswerteeinrichtung und eine Anzeigeeinrichtung gelöst, wobei die wenigstens eine Sensoranordnung nach Merkmalen gemäß dem ersten Aspekt der Erfindung ausgebildet ist. Sämtliche Vorteile die für eine Sensoranordnung gemäß dem ersten Aspekt der Erfindung aufgezeigt wurden, gelten somit selbstverständlich auch für ein erfindungsgemäßes Sensorsystem. Durch die Auswerteeinrichtung werden die durch die Sensoranordnung gemessenen Messdaten ausgewertet und die Positionen, insbesondere die Abstände, der Objekte, die die fahrbare Plattform umgeben, errechnet. Die Anzeigeeinrichtung dient zur Information des Benutzers der fahrbaren Plattform. Dabei können sowohl optische als auch akustische Anzeigeeinrichtungen vorgesehen sein.

### BEVORZUGTE AUSFÜHRUNGSBEISPIELE

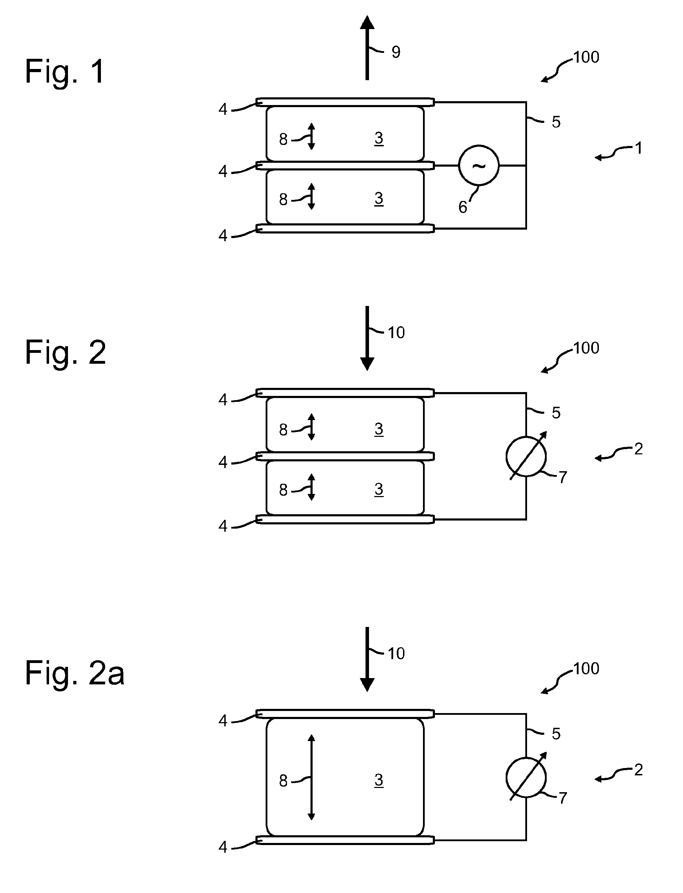

Weitere, die Erfindung verbessernde Maßnahmen werden nachstehend gemeinsam mit der Beschreibung von bevorzugten Ausführungsbeispielen der Erfindung anhand der Figuren näher dargestellt. Elemente mit gleicher Funktion und Wirkungsweise sind in den Figuren 1 bis 4 jeweils mit denselben Bezugszeichen versehen. Es zeigen jeweils schematisch:
- Fig. 1: ein Sendeelement einer erfindungsgemäßen Sensoranordnung,
- Fig. 2: eine Ausgestaltungsform eines Empfangselement einer erfindungsgemäßen Sensoranordnung,
- Fig. 2a: eine weitere Ausgestaltungsform eines Empfangselement einer erfindungsgemäßen Sensoranordnung,
- Fig. 3: eine erfindungsgemäße Sensoranordnung, die als lineares Sensorarray ausgebildet ist und
- Fig. 4: eine erfindungsgemäße Sensoranordnung, die als n x m-Sensorarray ausgebildet ist.

In Figur 1 ist ein Sendeelement 1 einer erfindungsgemäßen Sensoranordnung 100 eines Sensorsystems abgebildet. Das Sendelement 1 ist dabei als ein Stapel aus zwei Dickenschwingerelementen 3 gebildet. Am oberen und unteren Ende des Stapels und zwischen den Dickenschwingerelementen 3 befinden sich Elektroden 4, die zur elektrischen Verbindung der Dickenschwingerelemente 3 und zur Kontaktierung des gesamten Sendeelementes 1 verwendet werden. Über diese Elektroden 4 sind die Dickenschwingerelemente 3 mittels elektrischer Leitungen 5 parallel geschaltet. Die elektrischen Leitungen 5 sind ferner mit einer Spannungsquelle 6 verbunden, die insbesondere als hochfrequente Wechselspannungsquelle betrieben werden kann. Beim Anliegen einer Wechselspannung durch die Spannungsquelle 6 an die Dickenschwingerelemente 3 ändern diese ihre Dicke (durch Pfeile 8 angedeutet) in Abhängigkeit der anliegenden Spannung. In der abgebildeten Seitenansicht ändert sich dadurch die gesamte Höhe des Stapels. Durch die elektrische Parallelschaltung der Dickenschwingerelemente 3 wird dieselbe Spannung der Spannungsquelle 6 für jedes einzelne Dickenschwingerelement 3 benutzt, um diese anzusteuern. Bei einer gleichen Spannung bewirkt dies eine insgesamt größere Dickenänderung 8 des gesamten Stapels, im Vergleich zu einer Kontaktierung nur der untersten und der obersten Elektrode 4. Dadurch kann eine größere Druckamplitude des ausgesandten Ultraschallimpulses 9 erzeugt werden. Dies ermöglicht wiederum eine höhere Sensitivität der Sensoranordnung 100 und damit eine bessere Lokalisierung der eine fahrbare Plattform umgebenden Objekte. Ergänzend dazu ist selbstverständlich auch eine elektrisch parallele Verschaltung der Dickenschwingerelemente 3 des Stapels mit zumindest einem Spannungsmessgerät 7 (nicht abgebildet) möglich. Das Sendeelement 1 lässt sich somit auch als Empfangselement 2 betreiben, wobei berücksichtigt werden muss, dass durch die elektrisch parallele Schaltung an jedem einzelnen Dickenschwingerelement die durch die reflektierten Ultraschallimpulse 10 (nicht gezeigt) erzeugte Spannung gemessen wird. Die Sensitivität eines solchen Stapels ist daher erniedrigt gegenüber einem expliziten Empfangselement 2 mit seriell verschalteten Dickenschwingerelementen 3. Die Gesamtsensitivität der Sensoranordnung 100 wird dennoch durch einen derartigen zusätzlichen Betrieb der Sendeelemente 1 als Empfangselemente 2 erhöht.

In den Figuren 2 und 2a ist jeweils ein Empfangselement 2 einer erfindungsgemäßen Sensoranordnung 100 eines Sensorsystems gezeigt, wobei in Figur 2 das Empfangselement 2 einen Stapel aus zwei Dickenschwingerelementen 3 und in Figur 2a ein einzelnes Dickenschwingerelement 3 aufweist, wobei letzteres eine Dicke aufweist, die der Gesamtdicke aller Dickenschwingerelemente des in Figur 2 gezeigten Empfangselements 2 entspricht. Am oberen und unteren Ende des Empfangselements 2 und in der Mitte des Stapels und zwischen den Dickenschwingerelementen 3 (Figur 2) befinden sich Elektroden 4. Im Gegensatz zum Sendeelement 1 ist beim Empfangselement 2 ein Spannungsmessgerät 7 über elektrische Leitungen 5 mit der obersten und der untersten Elektrode 4 des Empfangselements 2 elektrisch leitend verbunden. Die Dickenschwingerelemente 3 des Empfangselementes 2 in Figur 2 sind somit elektrisch seriell geschaltet. Trifft nun ein reflektierter Ultraschallimpuls 10 auf das Empfangselement 2, werden die verbauten Dickenschwingerelemente 3 zusammengedrückt, sie erfahren eine Dickenänderung 8. Diese Dickenänderung 8 bewirkt, dass an der obersten und untersten Elektrode 4 eine elektrische Spannung entsteht, die mit dem Spannungsmessgerät 7 gemessen werden kann. Diese Spannung setzt sich dabei bei dem Empfangselement 2, das in Figur 2 gezeigt ist, additiv aus den Spannungen zusammen, die durch die Dickenänderungen 8 an den einzelnen Dickenschwingerelementen 3 entsteht. Die serielle Verschaltung der Dickenschwingerelemente 3 bewirkt somit die höhere Sensitivität eines Stapels an Dickenschwingerelementen 3 gegenüber einem einzelnen Dickenschwingerelement 3 dieser Dicke. An einem einzelnen Dickenschwingerelement 3 größerer Dicke, wie in Figur 2a gezeigt, entsteht durch den reflektierten Ultraschallimpuls 10 eine höhere Spannung wie an einem einzelnen, dünneren Dickenschwingerelement 3. Mit der in Figur 2a abgebildeten Ausgestaltungsform eines Empfangselements 2 kann daher eine ähnlich hohe Sensitivität erreicht werden wie mit einem Empfangselement 2, wie es in Figur 2 gezeigt ist. Selbstverständlich kann auch eine Spannungsquelle 6 (nicht abgebildet) mit elektrischen Leitungen 5 elektrisch seriell mit den Dickenschwingerelementen 3 geschaltet sein. Das Empfangselement 2 lässt sich somit auch als Sendeelement 1 betreiben, wobei berücksichtigt werden muss, dass durch die elektrisch serielle Schaltung eine deutlich niedrigere Schallamplitude erzeugt werden kann, als es bei einer elektrisch parallelen Schaltung bei einem Sendeelement 1 möglich ist. Die Gesamtamplitude der emittierten Ultraschallimpulse 9 (nicht abgebildet) der Sensoranordnung 100 wird dennoch durch einen derartigen zusätzlichen Betrieb der Empfangselemente 2 als Sendeelemente 1 erhöht.

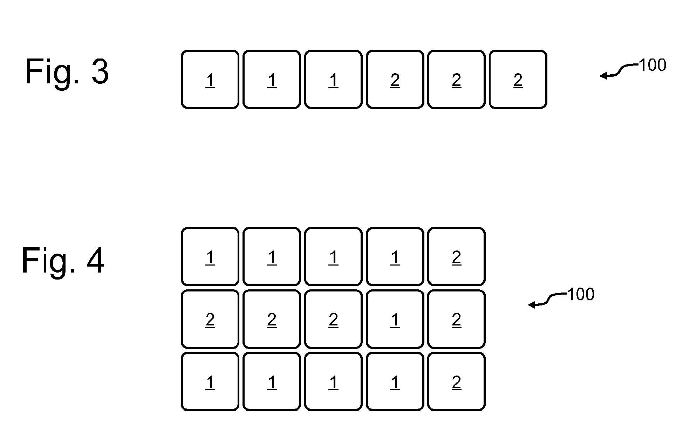

Die Figuren 3 und 4 zeigen mögliche Anordnungen von Sendeelementen 1 und Empfangselementen 2 einer Sensoranordnung 100 zu einem Sensorarray. In Figur 3 ist ein lineares Sensorarray gezeigt, in dem die einzelnen Sendeelemente 1 und Empfangselemente 2 in einer Reihe angeordnet sind. Bei einer derartigen Anordnung ist zu beachten, dass jedes der Sendeelemente 1 und der Empfangselemente 2 zumindest einem weiteren Element gleicher Bauart benachbart sein kann. Dadurch ist eine Formung des durch die Sendeelemente 1 ausgesandten Ultraschallimpulses 9 und eine möglichst genaue Detektion, insbesondere eine Richtungsbestimmung, des reflektierten Ultraschallimpulses 10 durch die nebeneinander angeordneten Empfangselemente 2 möglich. Ein lineares Sensorarray eignet sich dabei insbesondere zum Beispiel für eine Anordnung an der Kennzeichenhalterung eines Fahrzeugs. Figur 4 zeigt ein n x m-Sensorarray, wobei in diesem Fall n = 3 und m = 5. Die Sensoren, das heißt die Sendeelemente 1 und die Empfangselemente 2, bilden somit ein Rechteck. Auch hier ist zu beachten, dass, um ein gutes Formen des ausgesandten Ultraschallimpulses und eine gute Richtungsauflösung beim Detektieren des reflektierten Ultraschallimpulses zu erreichen , die Sendeelemente 1 und die Empfangselemente 2 derart angeordnet sein sollten, dass jeweils mindestens zwei gleichartige Elemente benachbart sind. Derart flächig ausgebildete Sensorarrays bieten eine hohe Auflösung, insbesondere eine hohe Winkelauflösung, bei der Lokalisierung der die fahrbare Plattform umgebenden Objekte bei vergleichsweise geringen Bauraumanforderungen. Sie eignen sich zum Beispiel insbesondere zur Anbringung an Stoßfängern des Fahrzeugs.

Die voranstehend genannten Ausführungsformen beschreiben die vorliegende Erfindung im Rahmen von Beispielen. Selbstverständlich können Merkmale zu den einzelnen Ausführungsformen, sofern technisch sinnvoll, frei miteinander kombiniert werden ohne den Rahmen der vorliegenden Erfindung zu verlassen.

## Patentansprüche

1. Sensoranordnung (100) eines Sensorsystems einer fahrbaren Plattform zur Lokalisierung von die fahrbare Plattform umgebenden Objekten, aufweisend zumindest ein Sendeelement (1) und wenigstens ein von dem zumindest einen Sendeelement (1) funktional getrenntes Empfangselement (2), wobei das zumindest eine Sendeelement (1) zum Aussenden von Ultraschallsignalen (9) und das wenigstens eine Empfangselement (2) zum Empfangen von an den die fahrbare Plattform umgebenden Objekten reflektierten Ultraschallsignalen (10) ausgestaltet sind,
**dadurch gekennzeichnet,**
**dass** das zumindest eine Sendeelement (1) und das wenigstens eine Empfangselement (2) jeweils ein Dickenschwingerelement (3) aufweisen.

2. Sensoranordnung (100) eines Sensorsystems nach Anspruch 1,
**dadurch gekennzeichnet, dass** das zumindest eine Sendeelement (1) einen Stapel aus zumindest zwei Dickenschwingerelementen (3) aufweist, die elektrisch parallel geschaltet sind.

3. Sensoranordnung (100) eines Sensorsystems nach Anspruch 1 oder 2, **dadurch gekennzeichnet, dass** das wenigstens eine Empfangselement (2) einen Stapel aus zumindest zwei Dickenschwingerelementen (3) aufweist, die elektrisch seriell geschaltet sind.

4. Sensoranordnung (100) eines Sensorsystems nach einem der Ansprüche 1 bis 3, **dadurch gekennzeichnet, dass** zwei oder mehr Sendeelemente (1) und zwei oder mehr Empfangselemente (2) vorgesehen sind.

5. Sensoranordnung (100) eines Sensorsystems nach Anspruch 4, **dadurch gekennzeichnet, dass** die zwei oder mehr Sendeelemente (1) benachbart zueinander und die zwei oder mehr Empfangselemente (2) benachbart zueinander angeordnet sind.

6. Sensoranordnung (100) eines Sensorsystems nach Anspruch 4 oder 5, **dadurch gekennzeichnet, dass** die Sendeelemente (1) und die Empfangselemente (2) zusammen ein Sensorarray bilden.

7. Sensoranordnung (100) eines Sensorsystems nach Anspruch 6, **dadurch gekennzeichnet, dass** das Sensorarray ein irreguläres Sensorarray, ein lineares Sensorarray oder ein n x m-Sensorarray ist, wobei n und m ganze Zahlen größer als 1 sind.

8. Sensoranordnung (100) eines Sensorsystems nach einem der Ansprüche 4 bis 7, **dadurch gekennzeichnet, dass** jedem der zumindest zwei Sendeelemente (1) zumindest ein weiteres Sendeelement (1) benachbart angeordnet ist und/oder dass jedem der zumindest zwei Empfangselemente (2) zumindest ein weiteres Empfangselement (2) benachbart angeordnet ist.

9. Sensoranordnung (100) eines Sensorsystems nach einem der Ansprüche 1 bis 8, **dadurch gekennzeichnet, dass** jedes Sendeelement (1) auch als Empfangselement (2) und jedes Empfangselement (2) auch als Sendeelement (1) ausgebildet sind.

10. Sensorsystem einer fahrbaren Plattform zur Lokalisierung von die fahrbare Plattform umgebenden Objekten, aufweisend wenigstens eine Sensoranordnung (100), eine Auswerteeinrichtung und eine Anzeigeeinrichtung, **dadurch gekennzeichnet, dass** die wenigstens eine Sensoranordnung (100) nach einem der Ansprüche 1 bis 9 ausgebildet ist.
